# EUROPEAN PATENT SPECIFICATION

(11) **EP 2 757 243 B1**
(45) Date of publication and mention of the grant of the patent: **12.08.2015**
(21) Application number: 13290015.0
(22) Date of filing: 18.01.2013
(51) Int. Cl.: F02K 9/52

(54) **Injector element**
Injektorelement
Élément d'injecteur

(43) Date of publication of application: 23.07.2014
(73) Proprietor: Airbus DS GmbH, 82024 Taufkirchen (DE)
(72) Inventor: De Bonn, Olivier, 85521 Ottobrunn (DE); Mäding, Chris, 85716 Unterschleissheim (DE); Obermaier, Georg, 83071 Stephanskirchen (DE)
(74) Representative: Binder, Karin Meta

(56) References cited:
- DE-A1- 4 438 495
- DE-C1- 4 305 154
- DE-C1- 19 515 879
- US-A- 3 464 633
- US-A- 3 515 353

## Description

The invention pertains to an injector element, in particular for a rocket drive, for operation with a first and a second propellant, comprising a central body, a sleeve and a flow splitter. More particularly, the invention pertains to a coaxial injector element. The central body comprises a flow channel with an outlet, the central body generating a conical drop distribution at the outlet forming a fuel cone, wherein the first propellant, normally an oxidant, is provided in the central body. The sleeve concentrically surrounds the central body to form an annular flow channel for the second propellant, normally fuel. The flow splitter is arranged between the central body and the sleeve for splitting the second propellant into a plurality of individual flows. The flow splitter includes a given number of passage channels which are distributed around the central body, each of the passage channels for generating a fine propellant jet.

Coaxial injector elements for rocket drives are known in different variants. In the case of hypergolic propellants, the two components meet one another in the liquid form after the injection and react spontaneously with one another on contact. It is therefore important to provide for the largest possible reacting surfaces, i.e., to adequately prepare the two components separately from one another, and then to unite them without great differences in velocity.

A coaxial injector element, for example, is known from US 5,456,065 corresponding to DE 43 05 154 C1. The injector element includes an at least extensively rotationally symmetrically central body for the oxidant. The central body includes a flow channel with a twisting insert and with a cross sectional contraction leading to an outlet with a sharp opening edge. A sleeve is provided concentrically surrounding the central body and delimiting an annular flow channel for the fuel. The annular flow channel has lateral inlet openings and an outlet with a circular cylindrical inner contour with a propellant opening to the combustion chamber having a sharp opening edge. The oxidant flow channel has a circular cylindrical internal contour at least in an area of the outlet opening. The oxidant opening edge and the propellant opening edge are both located in a plane of a front surface of the combustion chamber. A flow divider is provided for dividing the fuel flow into 5 to 20 individual flow portions of equal flow rate and cross section at equally spaced locations. The flow divider is arranged in the fuel flow channel between the sleeve forming a fuel opening and the central body.

US 5,704,551 corresponding to DE 195 15 879 A1 describes an injector element in bicoaxial construction, i.e. the injector element comprises an inner element with a first outlet opening to form a conical oxidant jet and an outer element arranged coaxially thereto with further second outlet openings in the form of passage channels to form fuel jets.

US 3,515,353 discloses an injector device with a body and an obturator as outer and inner valve members. The valve members define an intervening, annular exit orifice means adjacent and opening axially through the front or right hand end of the outer member and a fluid passage communicating with this orifice means. The fluid emerges axially through this annular orifice means along a generally annular flow path. Annular orifice means has inner and outer perimeters and is bounded along one perimeter by a cylindrical orifice boundary surface concentric with the common axis of the valve members and along its other perimeter by an annular radially projecting orifice boundary lip having a circumferential surface confronting and concentric with the cylindrical boundary surface.

A disadvantage of the above mentioned known injector elements is that oxidant may infiltrate from the combustion chamber through the flow divider into a distribution space of the propellant due to capillary effects. As a result an unwanted reaction between the oxidant and the propellant may occur within the injector element.

It is an object of the present invention to provide an injector element which dos not suffer from the aforementioned problem of migration form oxidant into a distribution space of propellant. It is a further embodiment of the invention to provide an improved rocket drive.

These objects are solved by an injector element according to claim 1 and a rocket drive according to claim 5. Preferred embodiments are set out in the dependent claims.

According to the invention, an injector element of coaxial design is provided for a rocket drive for operation with a first and a second propellant, comprising a central body, a sleeve and a flow splitter. The central body comprises a flow channel with an outlet, the central body generating a conical drop distribution at the outlet form-ing a fuel cone, wherein the first propellant, normally an oxidant, is provided in the central body. The sleeve concentrically surrounds the central body to form an annular flow channel for the second propellant, normally fuel. The flow splitter is arranged between the central body and the sleeve for splitting the second propellant into a plurality of individual flows. The flow splitter includes a given number of passage channels which are distributed around the central body, each of the passage channels for generating a fine propellant jet. The passage channels are formed between annular rings extending towards each other to provide sharp circumferential edges to the passage channels, a first of the rings being part of the central body and a second of the rings being part of the sleeve, wherein one of the first and the second annular rings having protrusions which are distributed around the central body and adjoin to the other annular ring.

The invention is based on the consideration that the migration of the first propellant (the oxidant) from the combustion chamber towards a distribution space of the second propellant (the fuel) arises because of broken edges within the circumference of the slots of the flow splitter. This results in unbroken surfaces either of the sleeve or the central body or both, depending on whether the flow splitter is part of the sleeve or the central body or none of them.

The injector element according to the invention avoids unbroken surfaces within the circumference of the slots of the flow splitter by providing appropriate edges. This leads to a protection against migration of oxidant into the distribution space of the fuel. Hence, reliability of the injector element, an injector head comprising a plurality of such injector elements as well as a rocket drive is enhanced.

The radial extension of each of the two annular rings, i.e. their thickness, may differ from each other or be the same. The dimension of the radial extension of each of the two radial rings has to be such that a respective edge is provided to stop capillary movement of oxidant towards the distribution space. The dimensions can be calculated or determined by experiments.

According to an embodiment, the annular rings are distant to a sharp-edged opening through which the second propellant is emitted.

According to a further embodiment, the passage channels have the shape of a rectangular or a trapezoid. For the sake of clarity, a cross-section through a respective slot in a plane being perpendicular to the longitudinal axis results in the rectangular or trapezoid shape. However, the slots may have other shapes deviating from a rectangle or a trapezoid, too.

According to a further embodiment, a short side of the passage channels extends in a radial direction and a long side of the passage channels extends in the direction of an arc around the central body. This embodiment facilitates formation of the two opposed annular rings. However, an arrangement vice versa in which the long side of the passage channels extends in a radial direction and the short side of the passage channels extends in the direction of an arc around the central body may be chosen, too. Even mixed arrangements are possible.

According to a second aspect of the invention, a rocket drive comprises at least one injector element according to one of the embodiments set out above. A rocket engine having at least one injector element according to the invention has an increased reliability because no unwanted reaction of oxidant and fuel occurs outside the combustion chamber.

More details and advantages of the invention will be explained by reference to the accompanying figures.
- Fig. 1: shows a partial longitudinal sectional view through an injector element according to the invention.
- Fig. 2: shows a top view of the injector element of Fig. 1 illustrating the shape of the passage channels for a propellant.
- Fig. 3: shows an enlarged view of a passage channel of the injector element of Fig. 1.
- Fig. 4: shows a partial longitudinal sectional view through a conventional injector element.
- Fig. 5: shows a top view of the injector element of Fig. 4 illustrating the shape of the passage channels for a propellant.
- Fig. 6: shows an enlarged view of a passage channel of the injector element of Fig. 4.

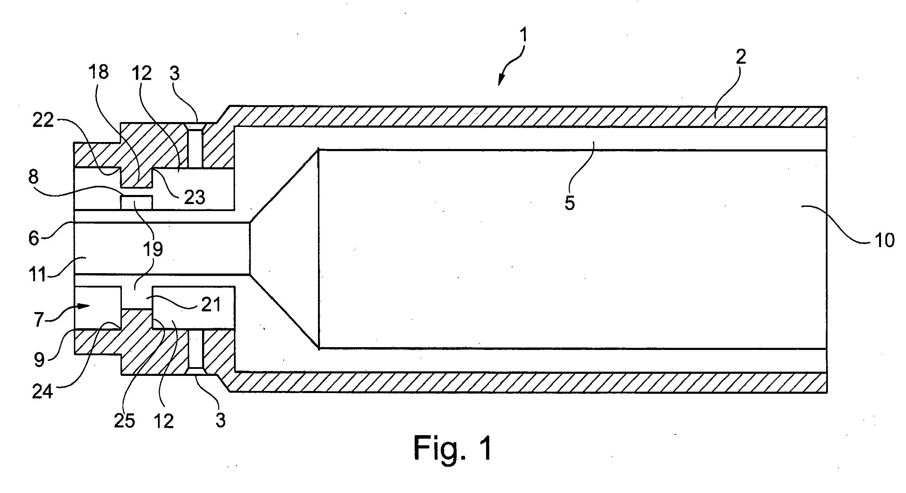

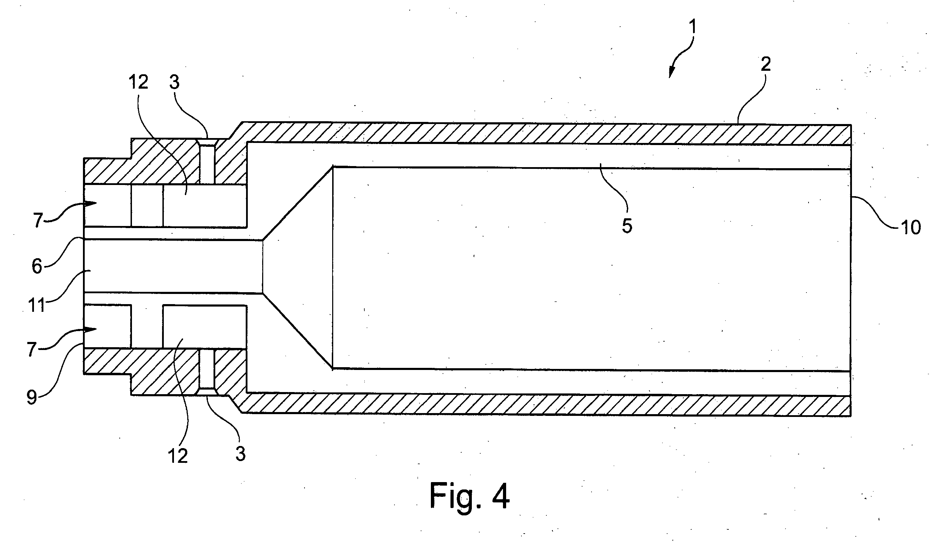

The injector element 1 illustrated in Figs. 1 and 4 is part of an injector head of a rocket engine, wherein several hundred of such the injector elements 1 may be arranged in the head, depending on the size of the engine. Every individual injector element 1 consists of two main parts, namely, a central body 5 and the sleeve 2.

The central body 5 contains on the inside an oxidant flow channel 10, which is divided into a plurality of sections with different functions. On its outside, it carries the geometric structure limiting the flow cross section of the fuel. An oxidant flows from a distribution space arranged above the injector elements 1 via a throttle (not shown) and into the oxidant flow channel 10. The throttle is used to set the desired injector pressure drop, which is needed for uncoupling the vibrations between the combustion chamber and the delivery system. The throttle is connected to the central body 5 via a not shown weld seam. A rotary movement, which is necessary for the preparation of the oxidant, is superimposed to the axial flow movement of the liquid oxidant, for example, by a twisting insert (not shown) arranged below, i.e. downstream, the throttle. Via the cross section contraction arranged downstream of the twisting insert, the oxidant reaches the cylindrical outlet 11, and its sharp-edged opening 6 forms the inlet into the not shown combustion chamber. Due to the twist still present in the opening 6, the jet of liquid oxidant expands directly after the inlet into the combustion chamber and disintegrates into individual drops. The angle of the oxidant spray cone formed and the hollow conical or solid conical distribution of the oxidant over the cone cross section depend on the shape of the twisting insert and the geometry of the oxidant flow channel.

The fuel flow channel is formed by the sleeve 2 concentrically surrounding the central body 5 in conjunction with the slots 8 arranged on the circumference of the central body 5. The propellant flows from a distribution space being different to the distribution space of the oxidant via radial throttle openings 3 and into the annular gap 12. The fuel subsequently flows through the axially arranged slots 8 of a flow divider 7, as a result of which it is divided into a plurality of individual jets of rectangular cross section.

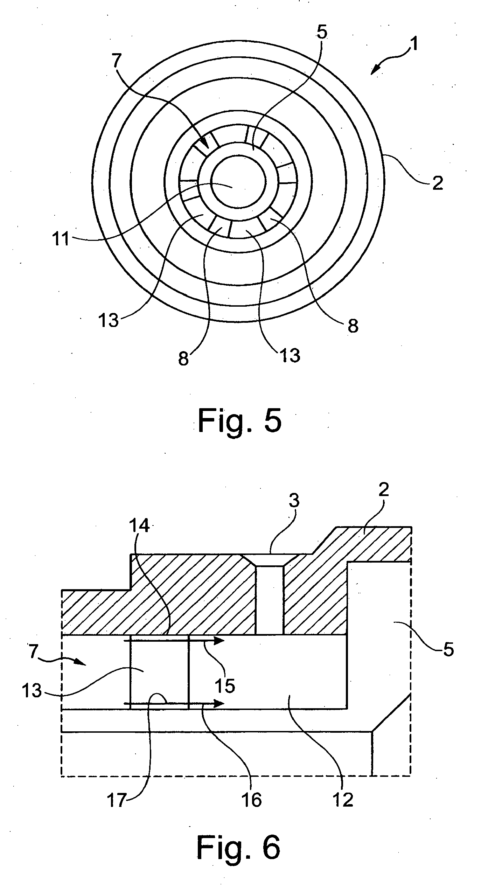

In a conventional injector element 1 illustrated in Figs. 4 to 6, the flow divider 7 is made in one piece with the central body 5. Typically, the slots 8 are made by milling groves of desired shaped into the material of the central body, thereby creating the flow divider 7 with the slots 8. At the outside the grooves/slots 8 are closed with the sleeve 2, which can be best seen from Fig. 5. The remaining material between two adjacent slots 8 is a division bar 13 (so called post). The division bars 13 are part of the flow splitter 7 which is as mentioned an integral part of the central body.

As can be seen from Fig. 6, which shows a cross section through the injector element and a division bar 13 separating two adjacent 8 slots from each other, an outward end 14 of the division bar 13 adjoins to the sleeve 2. Due to the unbroken surface of the sleeve over the circumference of the sleeve, oxidant can migrate due to capillary effects into the annular gap 12. This direction and place of oxidant migration is marked by arrow 15.

The same oxidant migration can occur at the feet 17 of the slots 8 which form an unbroken surface with the outer surface of the central body 5. This direction and place of oxidant migration is marked by arrow 16.

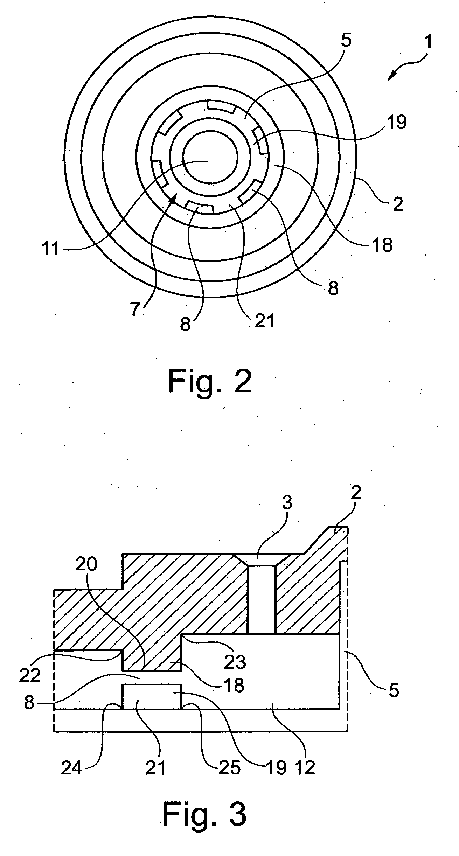

Referring to Figs. 2 and 3, illustrating an embodiment according to the invention, the unbroken surfaces are avoided by a different configuration of the flow divider. The slots 8 are formed between two annular rings 18, 19 extending towards each other to provide sharp circumferential edges 22, 23, 24, 25 to the passage channels, i.e. the slots 8. The annular ring 18 is an integral part of the sleeve 2. The annular ring 19 is an integral part of the central body 5. In the embodiment shown, protrusions 21 being part of the annular ring 19 and therefore of the central body 5, too, are distributed around the central body 5 and adjoin to the annular ring 18. Alternatively, the protrusions could be an integral part of the annular ring 18. Likewise, protrusions could be made on both of the annular rings 18, 19 which adjoin each other. Between two adjacent protrusions 21 a slot 8 is formed.

The radial extension of each of the two annular rings 18, 19, i.e. their thickness, in radial direction, may differ from each other or be the same as is the case in the example. The dimension of the radial extension of each of the two radial rings 18,19 has to be such that a respective edge 22, 23, 24, 25 is provided to stop capillary movement of oxidant towards the distribution space 12. The dimensions can be calculated or determined by experiments.

By avoiding the unbroken surfaces, i.e. by providing the sharp edges 22, 23, 24, 25, migration of oxidant due to capillary effects will be avoided. Oxidant which possibly will collect outside the flow divider 7 will be stopped at edges 22 and 24. As a result no oxidant can accumulate in the annular gap 12.

Referring to Fig. 2, the shape of the slots 8 in a cross-section through a respective slot in a plane being perpendicular to the longitudinal axis is a rectangular or a trapezoid. However, the slots 8 may have other shapes deviating from a rectangle or a trapezoid, too.

Due to the radial extension (i.e. the thickness) of the annular rings 18, 19, a short side of the slots 8 extends in a radial direction and a long side of the passage channels extends in the direction of an arc around the central body 5. This embodiment facilitates formation of the two opposed annular rings 18, 19. However, an arrangement vice versa in which the long side of the passage channels extends in a radial direction and the short side of the passage channels extends in the direction of an arc around the central body is possible, too. Furthermore, the long sides of the slots might be inclined with regard to their radial extension to a longitudinal axis of the injector element. In this embodiment, the long sides of the slots extend in a plane which is perpendicular to the longitudinal axis of the injector element. By inclining the slots of the flow splitter the contact area between the two propellants can be increased, resulting in an increased combustion efficiency. The increased combustion efficiency leads to an increased engine power output.

Downstream of the slots 8, the jets of propellant either flow again through an annular gap, or they enter the combustion chamber directly via the sharp-edged (e.g. 90° angled edge 9) opening of the sleeve 2. The individual jets of fuel meet the oxidant spray cone in the combustion chamber and partially penetrate same.

For safety reasons, hypergolic propellants must be hermetically separated from one another before reaching the predetermined reaction zone. The central body 5 and the sleeve 2 are therefore connected to one another in a liquid-tight and airtight manner via different weld seams (not shown).

While a specific embodiment of the invention has been shown and described in detail to illustrate the application of the principles of the invention, it will be understood that the invention may be embodied otherwise without departing from such principles.

### REFERENCE NUMERALS

- 1: injector element
- 2: sleeve
- 3: radial throttle openings
- 5: central body
- 6: sharp edged opening
- 7: flow divider
- 8: slots
- 9: edge
- 10: oxidant flow channel
- 11: cylindrical outlet
- 12: annular gap
- 13: division bar
- 14: outward end of the division bar 13
- 15: direction of oxidant migration
- 16: direction of oxidant migration
- 17: foot of sleeve
- 18: annular ring
- 19: annular ring
- 20: protrusion
- 21: protrusion
- 22: edge
- 23: edge
- 24: edge
- 25: edge

## Claims

1. An injector element (1), in particular for a rocket drive, for operation with a first and a second propellant, comprising:
- a central body (5) with a flow channel with an outlet, the central body (5) generating a conical drop distribution at the outlet forming a fuel cone, the first propellant being provided in the central body (5);
- a sleeve (2) concentrically surrounding the central body (5) to form an annular flow channel for the second propellant;
- a flow splitter (7) arranged between the central body (5) and the sleeve (2) for splitting the second propellant into a plurality of individual flows, the flow splitter (7) including a given number of passage channels which are distributed around the central body (5), each of the passage channels for generating a fine propellant jet;
**characterized in that** the passage channels are formed between annular rings (18, 19) extending towards each other to provide sharp circumferential edges to the passage channels, a first of the rings (18, 19) being part of the central body (5) and a second of the rings (18, 19) being part of the sleeve (2), wherein one of the first and the second annular rings (18, 19) having protrusions (20, 21) which are distributed around the central body (5) and adjoin to the other annular ring.

2. The injector element according to claim 1, wherein the annular rings (18, 19) are distant to a sharp-edged opening (6) through which the second propellant is emitted.

3. The injector element according to claim 1 or 2, wherein the passage channels have the shape of a rectangular or a trapezoid.

4. The injector element (1) according to one of the preceding claims, wherein a short side of the passage channels extends in a radial direction and a long side of the passage channels extends in the direction of an arc around the central body (5).

5. A rocket drive comprising at least one injector element (1) according to one of the preceding claims.

## Patentansprüche

1. Injektorelement (1), insbesondere für einen Raketenantrieb, für den Betrieb mit einem ersten und einem zweiten Treibmittel, umfassend:
einen zentralen Körper (5) mit einem Strömungskanal mit einem Auslass, wobei der zentrale Körper (5) eine kegelförmige Tropfenverteilung am Auslass erzeugt, die einen Brennstoffkegel bildet, wobei das erste Treibmittel in dem zentralen Körper (5) bereitgestellt ist;
eine Hülse (2), die konzentrisch den zentralen Körper (5) umgibt, um einen ringförmigen Strömungskanal für das zweite Treibmittel zu bilden;
einen Strömungsteiler (7), der zwischen dem zentralen Körper (5) und der Hülse (2) zum Teilen des zweiten Treibmittels in mehrere Einzelströme angeordnet ist, wobei der Strömungsteiler (7) eine vorbestimmte Anzahl von Durchgangskanälen aufweist, die um den zentralen Körper (5) verteilt sind, wobei jeder der Durchgangskanäle einen feinen Treibmittelstrahl erzeugt;
**dadurch gekennzeichnet, dass** die Durchgangskanäle zwischen den ringförmigen Ringen (18, 19), die sich aufeinander zu erstrecken, ausgebildet sind, um den Durchgangskanälen scharfe Umfangskanten bereitzustellen, wobei ein erster der Ringe (18, 19) Teil des zentralen Körpers (5) ist und ein zweiter der Ringe (18, 19) Teil der Hülse (2) ist,
wobei einer der ersten und zweiten ringförmigen Ringe (18, 19) Vorsprünge (20, 21) aufweist, die um den zentralen Körper (5) verteilt sind und sich an den anderen ringförmigen Ring anfügen.

2. Injektorelement nach Anspruch 1, wobei die ringförmigen Ringe (18, 19) entfernt von einer scharfkantigen Öffnung (6) sind, durch die das zweite Treibmittel ausgestoßen wird.

3. Injektorelement nach Anspruch 1 oder 2, wobei die Durchgangskanäle die Form eines Rechtecks oder Trapezes aufweisen.

4. Injektorelement (1) nach einem der vorhergehenden Ansprüche, wobei sich eine kurze Seite der Durchgangskanäle in einer radialen Richtung erstreckt und eine lange Seite der Durchgangskanäle in der Richtung eines Bogens um den zentralen Körpers (5) erstreckt.

5. Raketentriebwerk, umfassend mindestens ein Injektorelement (1) nach einem der vorhergehenden Ansprüche.

## Revendications

1. Élément formant injecteur (1), en particulier pour un propulseur de fusée, destiné à fonctionner avec un premier et un second ergol, comprenant :
- un corps central (5) comportant une voie d'écoulement avec une sortie, le corps central (5) générant une distribution en gouttelettes conique au niveau de la sortie formant un cône de carburant, le premier ergol étant disposé dans le corps central (5) ;
- une chemise (2) entourant de façon concentrique le corps central (5) afin de former une voie d'écoulement annulaire pour le second ergol ;
- un diviseur de flux (7) disposé entre le corps central (5) et la chemise (2) afin de diviser le second ergol en une pluralité de flux individuels, le diviseur de flux (7) comprenant un nombre donné de voies de passage qui sont réparties autour du corps central (5), chacune des voies de passage étant destinée à générer un jet fin d'ergol ;
**caractérisé en ce que** les voies de passage sont formées entre des bagues annulaires (18, 19) s'étendant l'une vers l'autre de façon à doter les voies de passage de bords circonférentiels vifs, une première des bagues (18, 19) faisant partie du corps central (5) et une seconde des bagues (18, 19) faisant partie de la chemise (2), l'une des première et seconde bagues annulaires (18, 19) comportant des protubérances (20, 21) qui sont réparties autour du corps central (5) et sont adjacentes à l'autre bague annulaire.

2. Élément formant injecteur selon la revendication 1, dans lequel les bagues annulaires (18, 19) sont distantes d'une ouverture à bord vif (6) à travers laquelle est émis le second ergol.

3. Élément formant injecteur selon la revendication 1 ou 2, dans lequel les voies de passage présentent la forme d'un rectangle ou d'un trapèze.

4. Élément formant injecteur (1) selon l'une des revendications précédentes, dans lequel un côté court des voies de passage s'étend dans une direction radiale et un côté long des voies de passage s'étend dans la direction d'un arc autour du corps central (5).

5. Propulseur de fusée comprenant au moins un élément formant injecteur (1) selon l'une des revendications précédentes.
